Europäisches Patentamt

European Patent Office

Office européen des brevets

(11) Publication number: **0 507 491 A2**

# EUROPEAN PATENT APPLICATION

(21) Application number: **92302565.4**

(22) Date of filing: **25.03.92**

(51) Int. Cl.⁵: **G01N 27/06, B60S 1/08**

(30) Priority: **02.04.91 GB 9106905**

(43) Date of publication of application:
**07.10.92 Bulletin 92/41**

(84) Designated Contracting States:
**BE DE ES FR GB IT LU NL PT SE**

(71) Applicant: **PILKINGTON GLASS LIMITED**
**Prescot Road**
**St. Helens, Merseyside WA10 3TT(GB)**
Applicant: **PILKINGTON PLC**
**Prescot Road**
**St. Helens, Merseyside WA10 3TT(GB)**

(72) Inventor: **Mason, Charles Antony**

**18 Lynton Way, Windle**
**St. Helens, Merseyside WA10 6DZ(GB)**
Inventor: **Smith, Yolande Helen**
**2 Lathom Road**
**Southport, Merseyside, PR9 0JA(GB)**
Inventor: **Rogers, Gary Mark**
**493 Warrington Road**
**Springview, Wigan, WN3 4TF(GB)**

(74) Representative: **Lee, Michael John et al**
**Group Patents Department, Pilkington PLC,**
**Pilkington Technology Centre, Hall Lane,**
**Lathom**
**Nr. Ormskirk, Lancashire L40 5UF(GB)**

(54) **Moisture sensor for vehicle window.**

(57) The invention relates to a vehicle window with rain sensor components, and to a method of producing such a window. The rain sensor components comprise two spaced electroconductive areas (4,5) having extended adjacent opposing edges, said areas forming an impedance network of which the impedance varies with the presence or otherwise of raindrops on the window surface between said edges. To obtain conductive areas of high durability while ensuring the window retains satisfactory characteristics for bending and/or toughening, the said conductive areas (4,5) are formed by selectively partially removing a continuous pyrolytic electroconductive metal oxide coating (8) on the glass surface after the glass has been bent and/or toughened. The rain sensor components may be connected to an electrical circuit for detecting a change in the impedance of the impedance network and thereby activating a wiper mechanism.

Fig.2.

Rank Xerox (UK) Business Services

The invention relates to a vehicle window with rain sensor components, and to a method of producing such a window.

The concept of a rain sensor, to sense the presence of raindrops on a vehicle window, especially a windscreen or backlight, and activate a mechanism which switches on an electrically driven wiper or wipers, is well known. Some sensors which have been proposed rely on the effect of raindrops in modifying the optical properties of the window; others rely on the effect of moisture or raindrops in altering the electrical properties of a detector area on the window. The present invention is concerned with rain sensors in the latter category.

It has previously been proposed in US patent 4 831 493 to use a rain sensor comprising, on the outer face of the window, spaced adjacent electroconductive coated areas with "interdigitated fingers" which extend the length of the interface between the areas, the areas functioning together as an impedance network of which the impedance depends on the presence or absence of moisture between them.

US patent 4 831 493 suggests using, for the coated areas, a transparent tin oxide coating which may be applied pyrolytically or by vacuum deposition, a metal coating applied using a laser beam or a metallising gun, or a conductive ceramic paint containing a low melting frit and a metallic powder. When using the laser beam technique, the coating is applied in the required pattern by controlled movement of the laser beam. In other cases, it is proposed to define the areas to be coated using a screen e.g. a silk screen to print a ceramic paint on the glass, or a masking material applied to the glass to define the area to be coated.

The laser applied metal coatings are, unfortunately, insufficiently durable for use without protection on the outer face of the window, while the sprayed metal and ceramic paint coatings both tend to cause uneven wear of the wiper blades contacting them. From both these aspects, and also because they may be almost transparent, electroconductive metal oxide coatings are to be preferred. Unfortunately, if the necessary patterned coatings are applied to the glass before processing, then their presence causes a variation in the thermal properties of the glass over the area of the glass and detrimentally affects the annealing or toughening of the glass.

The coatings may of course be applied to the glass after bending and annealing or toughening and, indeed, when the coatings are applied by a vacuum deposition method, this is generally most convenient. However, when the coatings are to be applied by a pyrolytic method (which is generally advantageous in providing a more durable coating), the temperature to which the glass can be heated to deposit the coating is strictly limited since overheating the glass would deleteriously affect the stress in the annealed or toughened glass. We have now found that the processing of the glass to provide the coated patterned areas can be greatly simplified, whilst achieving a durable transparent coating, by fabricating the window from a pane bearing a continuous pyrolytic electroconductive metal oxide coating and partially removing the coating to provide the required pattern, providing the partial removal is carried out after bending and annealing or toughening the glass. When initial attempts were made to etch the coating selectively before bending, the electrical and optical properties of the product in and around the etched area deteriorated to an unacceptable extent on bending or toughening. Surprisingly, it was found that such deterioration could be avoided or at least limited by delaying partial removal of the coating until after bending or toughening of the coated glass.

According to the present invention there is provided a vehicle window with rain sensor components comprising, on an outer glass surface of the window, two spaced electroconductive areas composed of electroconductive metal oxide coatings and having extended adjacent opposing edges, said areas forming an impedance network of which the impedance varies as a function of the presence or otherwise of raindrops on the window surface between said edges, characterised in that the said conductive areas are formed by selective partial removal of a continuous pyrolytic electroconductive metal oxide coating on the glass surface after the glass has been bent and/or toughened. The coating may be selectively removed by, for example, laser etching, chemical etching or mechanical abrasion.

According to a further aspect of the invention there is provided a method of producing a vehicle window according to the invention which comprises cutting a blank for the window from a glass plate or ribbon carrying a continuous pyrolytic electroconductive metal oxide coating, bending and/or toughening the blank and selectively partially removing the coating to provide the spaced electroconductive areas.

In a still further aspect of the invention, the rain sensor components comprising spaced electroconductive areas are connected to an electrical circuit for detecting a change in the impedance of an impedance network incorporating said areas consequent on the presence of rain.

Provided the required coated areas are sufficiently defined and spaced from other coated areas, there will generally be no need to remove surplus coating from other areas of the glass. A doped tin oxide coating of the required conductivity may be almost transparent so that it may remain on the vision areas of the glass without significantly affecting the visual appearance of, or visibility through, the glass. Indeed, its presence may have a beneficial affect in reducing the loss of heat from a stationary vehicle and reducing the tendency for ice to form on the exposed window surface on a cold night.

The coatings used on the glass are preferably of tin oxide, doped with an element, for example fluorine or antimony, which increases the electroconductivity of the coating. The coatings will normally, although not necessarily, have a thickness in the range 100 nm to 1000 nm. Thinner coatings may have an insufficient conductivity after bending and/or toughening of the glass, while a coating thickness greater than 1000 nm offers little advantage, and has the twin disadvantages of (a) increased cost of coating materials to form the thicker coating and (b) reduced light transmission. Preferred coatings having a thickness in the range 150 nm to 400 nm. If desired, the tin oxide coating may be used in conjunction with a colour suppressing layer which suppresses the interference colour or colours which would otherwise be displayed by the coating, for example a colour suppressing underlayer as described in UK patent GB 2 031 756B.

The method used to selectively remove the coating is not critical. It may conveniently be done by chemical etching, for example, using a combination of zinc and hydrochloric acid applied to the glass through a suitable mask. For example, a pattern of masking material corresponding to the configuration of the desired patterned coating may be silk screen printed on the glass, the coating etched through the gaps in the masking material using a combination of zinc powder and hydrochloric acid, and the masking material removed.

The invention is illustrated but not limited by the following description with reference to the accompanying drawings of a preferred embodiment in which:

Figure 1 is a plan view of a vehicle backlight in accordance with the invention showing the location of electroconductive coated areas constituting rain sensor components in relation to the area of the backlight swept by the wiper.

Figure 2 is a diagram of the pattern of electroconductive coating on the backlight of Figure 1.

Figure 3 is a diagram of an electric circuit for use in a rain sensor used with a vehicle window according to the invention.

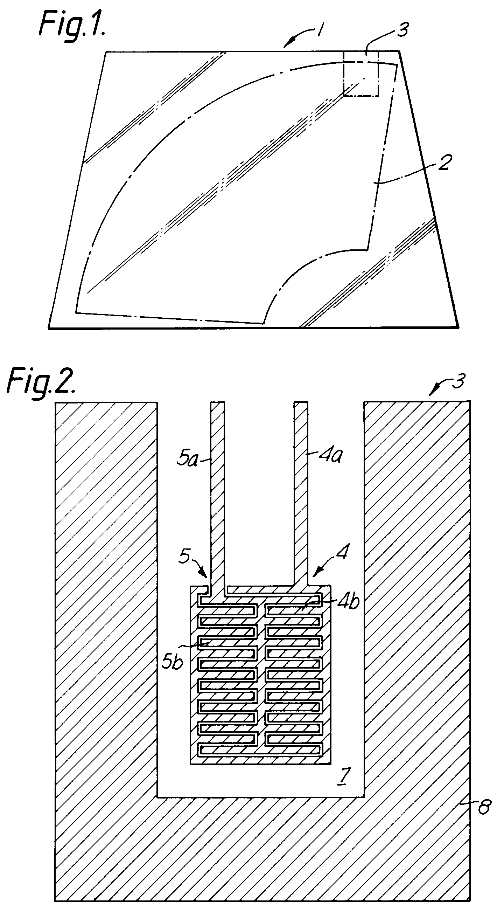

Referring to Figure 1, a vehicle window in the form of a backlight for a motor vehicle carries a substantially continuous coating of fluorine doped tin oxide on its outer face. In use, a windscreen wiper is provided to sweep the area 2. The window is provided with rain sensor components which comprise two spaced electroconductive areas in the region 3 at the top of backlight 1 within swept area 2.

The two spaced electroconductive areas 4,5 are shown in more detail in Figure 2, which shows diagrammatically the areas 7 (white) from which coating has been removed from the initial continuous coating 8 shown hatched in Figure 2 (in practice this coating is substantially transparent) to form the electroconductive areas. Each of the areas 4,5 comprises a conductive lead 4a,5a to an intricate patterned area 4b,5b, each of these pattern areas comprising a series of projections received between opposing projections on the other area so that the two areas 4b,5b have extended adjacent opposing edges separated by a narrow gap (shown in white) from which the coating has been removed. The gap between the projections is preferably in the range 0.5 to 1.5 mm. The leads 4a,5a provide electrical connections to the two electroconductive areas 4 and 5; they may be taken from the outer face of the window around the top edge by copper tape, which is preferably ultrasonically soldered to the glass e.g. using CERASOLZER solder (CERASOLZER is a trade mark used for a solder available from Asahi Glass).

The operation of the sensor relies upon the conductive properties of water droplets. When the window exterior, and in particular the gap between the two spaced conductive areas 4 and 5 is dry, the conductive areas are electrically isolated from one another as hereinafter discussed. Introducing water onto the non-conductive area so that water droplets bridge the gap between the opposed edges of the conductive areas alters the impedance exhibited by the sensor pattern comprising the two electroconductive areas.

If a DC source is applied between the electroconductive areas with water droplets bridging the gap between them, polarisation of the water molecules and incorporated ions occurs, the value of the impedance network formed by the electroconductive areas increases and the current becomes negligible. For this reason, it is preferred to use an AC source. It has been found that the received signal is most steady and easily detected if the AC source has a frequency of around 450Hz.

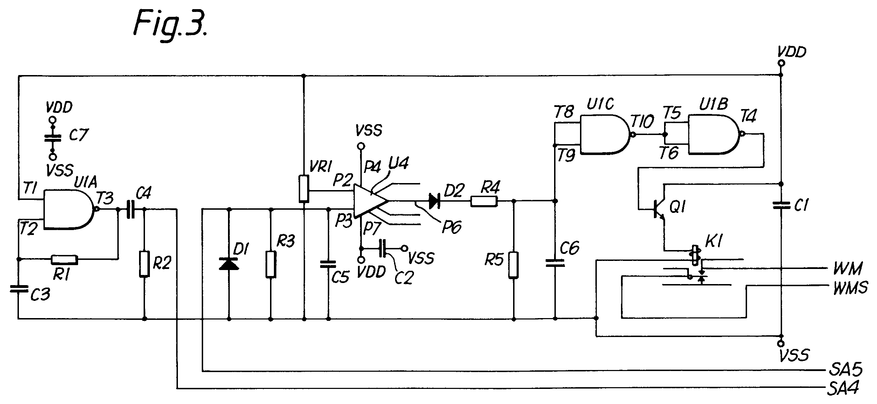

A suitable electrical circuit for the sensor is illustrated in Figure 3, in which the designations refer to the following:

| WM = | Wiper Motor |
| WMS = | Wiper Motor Supply |
| SA5 = | Sensor Area 5 |
| SA4 = | Sensor Area 4 |
| VDD = | Positive Voltage Supply (+ 12V) |
| VSS = | Ground (0V) |
| U1A ) | Gates of a commercially available |
| U1B ) | integrated circuit 4093B, connected |

|       |                                                                                              |
|-------|----------------------------------------------------------------------------------------------|
| via U1C ) | pins T1-T6 and T8-T10, as well as to the Voltage Supply by further pins (not shown)       |
| U4 =  | Commercially available integrated circuit CA3140, connected via pins P2-P4 and P6-P7          |
| Q1 =  | Transistor, commercially available as 2N4401                                                  |
| K1 =  | Single pole double throw relay                                                                |

and the following components have the following preferred values:

| R1 =  | 120 K              |
|-------|--------------------|
| R2 =  | 56 K               |
| R3 =  | 56 K               |
| R4 =  | 10                 |
| R5 =  | 1 M                |
| VR1 = | 20 K variable resistor |
| C1 =  | $10 \mu F$         |
| C2 =  | $0.1 \mu F$        |
| C3 =  | $0.022 \mu F$      |
| C4 =  | $0.1 \mu F$        |
| C5 =  | 470 pF             |
| C6 =  | $0.033 \mu F$      |
| C7 =  | $0.1 \mu F$        |

Note that integrated circuit 4093B comprises four gates U1A to U1D, the fourth of which, U1D, is not used in this circuit.

NAND gate U1A is configured to operate as an astable multivibrator. A rectangular waveform is generated between the 0V and +12V voltage levels at a frequency of around 468 Hz.

Capacitor C4 performs ac coupling to create a voltage swing between -6V and +6V about the 0V position. This ac signal is applied to sensor area 4 on backlight 1.

Schottky diode D1 removes the negative portion of ac signals detected by sensor area 5. Capacitor C5 removes the peaks of any positive voltage spikes picked up in the dry, i.e. no rain, state. The remaining signal enters integrated circuit U4, which functions as a comparator. The voltage at the non-inverting input is low when the sensor is dry and is an attenuated dc rectangular waveform when wet. A dc signal from resistor VR1 approximately midway between the low dry and peak wet values is therefore applied to the inverting input of integrated circuit U4 as a reference for comparison purposes.

This arrangement effects a spike free 0V signal at the comparator output in the absence of raindrops and a 468 Hz rectangular waveform between 0 and +12V for the wet condition.

The peak detection system (D2, R4, R5, C6) retains the 0V signal for the dry state but allows the rectangular waveform created in the wet situation to give rise to a constant dc level. The high position on the rectangular waveform charges up capacitor C6 through D2 and R4. When the input drops low, reverse biassed diode D2 restricts C6 discharge through resistor R5 only. The discharge time is sufficiently long to afford minimal voltage drop. The output signal is buffered through integrated circuit gates U1B and U1C before energising the coil of relay K1. This in turn switches to complete the power supply to the wipers.

In a specific Example, a glass blank for a backlight as shown in Figure 1 was cut from a larger pane of 4 mm glass carrying a continuous pyrolytic coating of electroconductive fluorine doped tin oxide about 350 nm thick with a colour suppressing underlayer as described in UK patent GB 2 031 756B. The coated blank was bent and toughened in a conventional manner tong held in a vertical position on a multi stage die bender furnace. Thereafter, the area 3, shown in Figure 1, adjacent the upper edge of the backlight was coated with SHIPLEY Photoresist 1350 solution (SHIPLEY is a trade mark used by The Shipley Company of Coventry), a positive photoresist, and allowed to dry in subdued light. Artwork (the negative of the required pattern of the conductive areas 4,5) was taped over the dried photoresist, and the photoresist, selectively screened by the said artwork, was exposed to UV-A radiation for approximately 4 minutes. The artwork was then removed, and the photoresist developed by washing in a 50% aqueous solution of SHIPLEY Microposit developer C0075. The unexposed photoresist softens and washes away in the developer to leave a positive of the original pattern. Excess developer was removed by washing, and a suspension of zinc powder in 0.1N hydrochloric acid applied to etch the coating from the parts of the region 3 between the required conductive areas and define those areas. Excess etchant was then removed by washing with water, and photoresist over the remaining coated areas in region 3 removed using acetone.

The defined electroconductive areas 4,5 were then connected to the electrical circuit shown in Figure 3 through connection points on the internal face of the window. Leads 4a and 5a were connected to the connection points by adhesive copper tape.

The effectiveness of the rain sensor was tested by spraying water on the exterior face of the backlight. It was found that a single droplet of water bridging the gap between the two electroconductive areas 4b,5b was sufficient to energise relay K1 and activate the wiper mechanism.

It is found that in practice the pyrolytic coating is highly durable and causes less wear of the wiper blade than the sprayed metal coatings referred to above. As the coating is transparent, the rain sensor is quite inconspicuous. Although there is some loss in the electroconductivity of the coating on bending and toughening of the coated glass, sufficient conductivity is retained to provide satisfactory operation of the rain sensor. Because the coating present during bending and toughening is continuous, its presence does not selectively affect the bending or toughening of specific areas of the glass and satisfactory bending and toughening can readily be achieved with simple modification of the normal heating, bending and toughening cycle to take account of the increased infra red reflectivity of the glass which results from the presence of the coating. Moreover, the benefits of durability provided by a pyrolytic coating are achieved without the need to reheat the glass after bending and toughening.

The remaining coating outside the region 3 does not affect the operation of the rain sensor and, being sufficiently transparent, does not substantially affect vision through the glass (although it is preferred to use a coating with a colour suppressing underlayer to avoid imparting any undesired tint to the glass and to ensure that the rain sensor areas remain as inconspicuous as possible).

## Claims

1. A vehicle window (1) with rain sensor components comprising, on an outer glass surface of the window, two spaced electroconductive areas (4,5) composed of electroconductive metal oxide coatings and having extended adjacent opposing edges, said areas forming an impedance network of which the impedance varies as a function of the presence or otherwise of raindrops on the window surface between said edges, characterised in that the said conductive areas (4,5) are formed by selectively partially removing a continuous pyrolytic electroconductive metal oxide coating (8) on the glass surface after the glass has been bent and/or toughened.

2. A vehicle window (1) according to claim 1 wherein the coatings are of doped tin oxide.

3. A vehicle window (1) according to claim 2 wherein the doped tin oxide is fluorine doped tin oxide.

4. A method of producing a vehicle window (1) according to any of claims 1 to 3 which comprises cutting a blank for the window from a glass plate or ribbon carrying a continuous pyrolitic electroconductive metal oxide coating (8), bending and/or toughening the blank to form the vehicle window and selectively partially removing the coating to provide the spaced electroconductive areas (4,5).

5. A method according to claim 4 wherein the coating (8) is of doped tin oxide.

6. A method according to claim 5 wherein the doped tin oxide is fluorine doped tin oxide.

7. A method according to any of claims 4 to 6 wherein the coating (8) is partially removed by selective chemical etching.

8. A method according to claim 7 wherein the coating (8) is etched with zinc and hydrochloric acid.

9. A vehicle window (1) with rain sensor components produced by a method according to any of claims 4 to 8.

10. A vehicle window (1) with rain sensor components comprising spaced electroconductive areas (4,5) according to any of claims 1 to 3 and 9, said components being connected to an electrical circuit for detecting a change in the impedance of an impedance network incorporating said areas consequent on the presence of rain.

Fig.1.

Fig.2.

Fig.3.

EP 0 507 491 A2